# EUROPEAN PATENT APPLICATION

(11) **EP 4 810 354 A1**
(43) Date of publication of application: **23.09.2026**
(21) Application number: 23957014.6
(22) Date of filing: 14.11.2023
(51) Int. Cl.: B62D 25/08, B62D 21/00, B62D 25/20

(54) **VEHICLE FRONT STRUCTURE**

(71) Applicant: Nissan Motor Co., Ltd., Yokohama-shi, Kanagawa 221-0023 (JP)
(72) Inventor: ISHII, Koji, Atsugi-shi, Kanagawa 243-0123 (JP); SATOU, Yutaka, Atsugi-shi, Kanagawa 243-0123 (JP); NAKANO, Shinji, Atsugi-shi, Kanagawa 243-0123 (JP)
(74) Representative: Global IP Europe Patentanwaltskanzlei
(86) International application number: PCT/JP2023/040912
(87) International publication number: WO 2025/104807

(57) **Abstract**

A vehicle front structure S includes a pair of side members (11L, 11R), a pair of strut towers (21L, 21R), a pair of suspension arm support portions (32L, 32R), a lower cross member 41, a pair of upper brackets (52L, 52R), and a pair of lower brackets (42L, 42R). The pair of side members (11L, 11R) extend in a vehicle front-rear direction. The pair of strut towers (21L, 21R) are each coupled to a corresponding one of the pair of side members (11L, 11R). The pair of suspension arm support portions (32L, 32R) each support a corresponding one of suspension arms (31L, 31R), and are fixed to a corresponding one of the pair of side members (11L, 11R). The lower cross member 41 is coupled to the pair of suspension arm support portions (32L, 32R). The pair of upper brackets (52L, 52R) each attach a powertrain 61 having at least an engine or a drive motor 62 to a corresponding one of the pair of side members (11L, 11R) or the pair of strut towers (21L, 21R). The pair of lower brackets (42L, 42R) attach the powertrain 61 to the lower cross member 41.

## Description

### TECHNICAL FIELD

The present invention relates to a vehicle front structure.

### BACKGROUND ART

Patent Literature 1 discloses a motor unit support device that mounts and supports a motor unit on a cross member. The device includes an axial fastening member whose axial direction coincides with the vehicle front-rear direction in order to secure mounting rigidity in the vehicle front-rear direction.

### CITATION LIST

### PATENT LITERATURE

Patent Literature 1: Japanese Unexamined Patent Application Publication No. 2018-114785

### SUMMARY OF INVENTION

### PROBLEMS TO BE SOLVED BY INVENTION

In the motor unit support device of Patent Literature 1, the number of parts increases and the structure becomes complex. When a powertrain including a motor is mounted in the front portion of a vehicle, a simpler structure may be required for supporting the powertrain. On the other hand, it is necessary to improve the mounting rigidity in the vehicle front-rear direction.

An object of the present invention is to provide a vehicle front structure that supports a powertrain and is capable of improving the mounting rigidity in the vehicle front-rear direction with a simple configuration.

### SOLUTION TO PROBLEMS

A vehicle front structure according to one aspect of the present invention includes a pair of side members, a pair of strut towers, a pair of suspension arm support portions, a lower cross member, a pair of upper brackets, and a pair of lower brackets. The pair of side members are provided at a front portion of a vehicle and extend in a vehicle front-rear direction. The pair of strut towers are provided above the pair of side members, and each strut tower is coupled to a corresponding one of the pair of side members. The pair of suspension arm support portions are provided below the pair of side members, each suspension arm support portion supporting suspension arms and being fixed to a corresponding one of the pair of side members. The lower cross member is provided between the pair of suspension arm support portions and is coupled to the pair of suspension arm support portions. The pair of upper brackets each attach a powertrain having at least an engine or a drive motor to a corresponding one of the pair of side members or the pair of strut towers. The pair of lower brackets attach the powertrain to the lower cross member.

### EFFECTS OF INVENTION

With the vehicle front structure described above, it is possible to provide a vehicle front structure that supports a powertrain and is capable of improving the mounting rigidity in the vehicle front-rear direction with a simple configuration.

### BRIEF DESCRIPTION OF DRAWINGS

[Fig. 1] Fig. 1 is a perspective view illustrating a vehicle front structure according to an embodiment.
[Fig. 2] Fig. 2 is a side view illustrating the vehicle front structure according to the embodiment, and is a view illustrating a structure of an upper bracket and a lower bracket on the right side of the vehicle front structure.
[Fig. 3] Fig. 3 is a perspective view illustrating a structure of a lower cross member and lower brackets.
[Fig. 4] Fig. 4 is a perspective view illustrating a structure of a suspension arm and suspension arm support portions.
[Fig. 5] Fig. 5 is a perspective view illustrating a structure when an upper cross member is attached to the vehicle front structure according to the embodiment.

### DESCRIPTION OF EMBODIMENTS

Hereinafter, a vehicle front structure S mounted on a vehicle according to an embodiment will be described with reference to the drawings. In each drawing, FW indicates a forward direction in a vehicle front-rear direction, UP indicates an upward direction in a vehicle vertical direction, and LH and RH indicate leftward and rightward directions in a vehicle width direction, respectively. In the following description, forward direction, front side, rearward direction, and rear side in the vehicle front-rear direction, upward direction, upper side, downward direction, and lower side in the vehicle vertical direction, and leftward direction, left side, rightward direction, and right side in the vehicle width direction are simply referred to as forward direction, front side, rearward direction, rear side, upward direction, upper side, downward direction, lower side, leftward direction, left side, rightward direction, and right side, respectively. In addition, components having the same functions as those already described are given the same reference signs, and descriptions thereof are omitted.

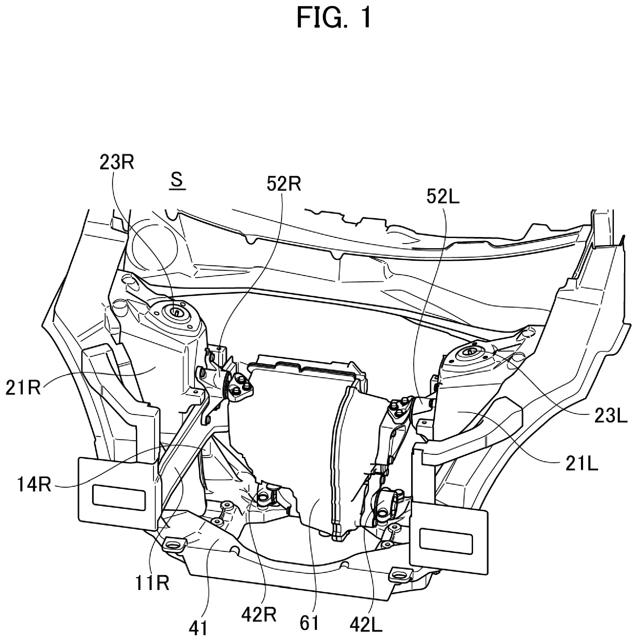

The vehicle front structure S includes a pair of side members 11L, 11R, a pair of strut towers 21L, 21R, a pair of suspension arm support portions 32L, 32R, and a lower cross member 41 (see Fig. 1). Further, the vehicle front structure S includes a powertrain 61 having at least an engine or a drive motor 62. The upper portion of the powertrain 61 is attached to the pair of side members 11L, 11R, or to the pair of strut towers 21L, 21R, via a pair of upper brackets 52L, 52R. The lower portion of the powertrain 61 is attached to the lower cross member 41 via a pair of lower brackets 42L, 42R (see Fig. 1).

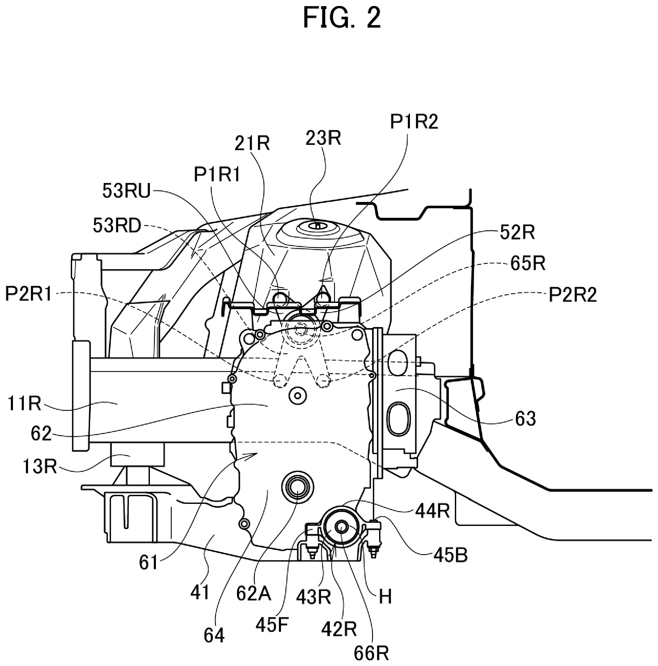

The pair of side members 11L, 11R are frame structural members disposed on the left and right side portions of the vehicle. The pair of side members 11L, 11R extend in the vehicle front-rear direction. Support brackets 13L, 13R that connect with the suspension arm support portions 32L, 32R are joined to front portions of the pair of side members 11L, 11R. Support arms 14L, 14R that connect with the suspension arm support portions 32L, 32R are joined to rear portions of the pair of side members 11L, 11R (see Figs. 1 and 2).

The pair of strut towers 21L, 21R are provided above the pair of side members 11L, 11R (see Fig. 1). Between the left strut tower 21L and the right strut tower 21R, the powertrain 61 having at least an engine or a drive motor for vehicle travel is arranged. In the configuration illustrated in Fig. 1, the powertrain 61 includes the drive motor 62, an inverter 63 which is a power conversion device disposed on the rear side of the drive motor 62, and a differential device 64 disposed on the lower side of the drive motor 62. Note that the components constituting the powertrain 61 and their arrangement are not limited to the above.

The upper portion of the powertrain 61 is provided with upper fixing shafts 65L, 65R extending outward in a vehicle width direction from left and right end portions of the powertrain 61, respectively. The left and right upper fixing shafts 65L, 65R are supported by being inserted into the upper brackets 52L, 52R, respectively, and are fixed to the side members 11L, 11R or the strut towers 21L, 21R. In the configuration illustrated in Fig. 1, the upper brackets 52L, 52R are fixed to the side members 11L, 11R and the strut towers 21L, 21R, respectively.

The upper bracket 52R may include front and rear upper leg portions 53RU and front and rear lower leg portions 53RD, provided at the right end portion (see Figs. 1 and 2). The upper leg portions 53RU are fastened and fixed by bolts to a right side surface of the strut tower 21R. On the other hand, the lower leg portions 53RD are fastened and fixed by bolts to a right side surface of the right side member 11R extending in the vehicle front-rear direction. A front fastening point of the upper leg portions 53RU by bolts is an upper attachment point P1R1 of the upper bracket 52R, and a rear fastening point of the upper leg portions 53RU by bolts is an upper attachment point P1R2. A front fastening point of the lower leg portions 53RD by bolts is a lower attachment point P2R1 of the upper bracket 52R, and a rear fastening point of the lower leg portions 53RD by bolts is a lower attachment point P2R2. Since the configuration of the left upper bracket 52L is the same as that of the right upper bracket 52R, description thereof is omitted. The upper portion of the powertrain 61 is fastened to the upper brackets 52L, 52R via the upper fixing shafts 65L, 65R in a direction parallel to the vehicle width direction, respectively (see Figs. 1 and 2).

The upper portions of the strut towers 21L, 21R are provided with fixation points 23L, 23R to which the suspension struts are fixed. The upper brackets 52L, 52R may be provided at positions on side surfaces of the strut towers 21L, 21R that overlap with the fixation points 23L, 23R of the strut towers 21L, 21R, to which the suspension struts are fixed in the vehicle front-rear direction, respectively (see Fig. 2). More specifically, in the vehicle front-rear direction, the fixation point 23L to which the left suspension strut is fixed may be disposed between a front fastening point and a rear fastening point of the upper bracket 52L, namely upper attachment points P1L1 and P1L2. In addition, in the vehicle front-rear direction, the fixation point 23L to which the left suspension strut is fixed may also be disposed between lower attachment points P2L1 and P2L2 (see Fig. 2). The positional relationship between the fixation point 23R, to which the right suspension strut is fixed, and the upper bracket 52R may be the same as the positional relationship between the fixation point 23L, to which the left suspension strut is fixed, and the upper bracket 52L, and thus description thereof is omitted.

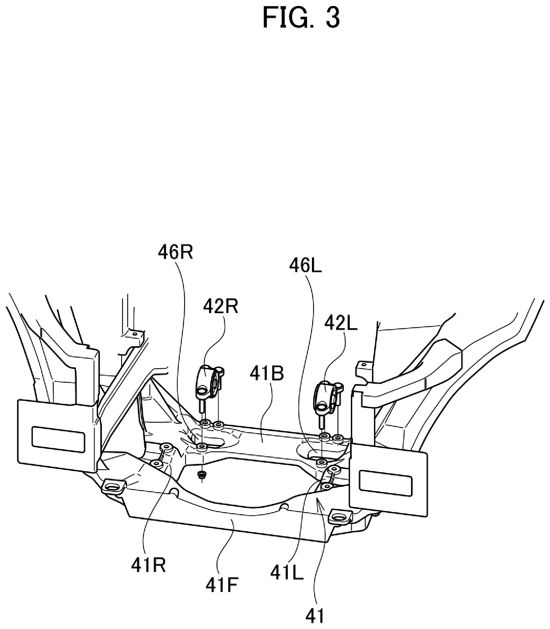

A left suspension arm 31L has a V-shape and supports a wheel (not illustrated). The suspension arm 31L is connected to the strut tower 21L. A suspension strut is disposed at the tip of the V-shape of the suspension arm 31L. The suspension arm 31L is fixed to the lower cross member 41 via the suspension arm support portion 32L (see Fig. 3).

The suspension arm support portions 32L, 32R are coupled to front portions and rear portions at left and right ends of the lower cross member 41, respectively. The V-shaped suspension arm 31L is coupled to each of the front and rear suspension arm support portions 32L. The suspension arm support portion 32L is fixed to the side member 11L located above via the support bracket 13L and the support arm 14L. Since the configuration of the right suspension arm 31R is the same as that of the left suspension arm 31L, description thereof is omitted.

The lower cross member 41 is disposed below the pair of side members 11L, 11R. The lower cross member 41 is a skeletal structural member extending in the vehicle front-rear direction and the vehicle width direction (see Figs. 1 and 2). The lower cross member 41 is also referred to as a suspension member.

The lower cross member 41 is provided between the suspension arm support portions 32L, 32R. The lower cross member 41 includes side beams 41L, 41R, a rear cross beam 41B, and a front cross beam 41F (see Fig. 3).

The side beams 41L, 41R extend forward from both ends of the rear cross beam 41B while inclining upward. Front ends of the side beams 41L, 41R are connected by the front cross beam 41F extending in the vehicle width direction (see Fig. 3).

The lower portion of the powertrain 61 is supported by the left and right lower brackets 42L, 42R, and is fixed to the lower cross member 41 (see Figs. 1 to 4). More specifically, the left and right ends of the lower portion of the powertrain 61 are provided with lower fixing shafts 66L, 66R extending outward in the vehicle width direction from the respective ends. The left and right lower fixing shafts 66L and 66R are supported by being inserted into the lower brackets 42L, 42R, respectively, and are fixed to the lower cross member 41. The lower portion of the powertrain 61 is fastened to the lower brackets 42L, 42R via the lower fixing shafts 66L, 66R in a direction parallel to the vehicle width direction, respectively (see Figs. 1 to 4).

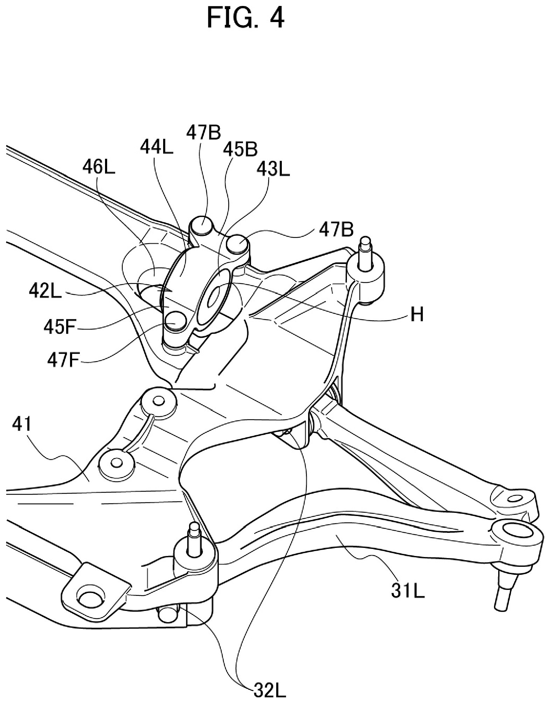

The left and right lower brackets 42L, 42R each include a through hole H into which a corresponding one of the lower fixing shafts 66L, 66R is inserted, cylindrical bearing portions 43L, 43R extending in the vehicle width direction with the through hole H at the center, and main body portions 44L, 44R that accommodate and fix cylindrical outer peripheral surfaces of the bearing portions 43L, 43R, respectively (see Figs. 3 and 4).

The left and right main body portions 44L, 44R are each provided with a front fixation portion 45F extending forward and a rear fixation portion 45B extending rearward and having two fastening points (see Figs. 3 and 4). The left lower bracket 42L is fixed to a left portion of the rear cross beam 41B by fastening the front fixation portion 45F and the rear fixation portion 45B with bolts. The fastening point of the front fixation portion 45F by bolts is a front fixation point 47F. The fastening point of the rear fixation portion 45B by bolts is a rear fixation point 47B (see Fig. 4). Since the structure in which the right lower bracket 42R is fixed to a right portion of the rear cross beam 41B is the same as the above, description thereof is omitted.

The left and right portions of the rear cross beam 41B of the lower cross member 41 may be provided with holes 46L, 46R penetrating in the vertical direction (see Figs. 3 and 4). The holes 46L, 46R are provided at positions corresponding to the lower brackets 42L, 42R, respectively. In a state where the lower brackets 42L, 42R are fastened to the lower cross member 41, the main body portions 44L, 44R and the bearing portions 43L, 43R of the lower brackets 42L, 42R are partially accommodated in, and attached to, the holes 46L, 46R. That is, when fixing the lower brackets 42L, 42R to the lower cross member 41, portions of the main body portions 44L, 44R and the bearing portions 43L, 43R are accommodated in the holes 46L, 46R, and the positions of the lower brackets 42L, 42R in the vertical direction are disposed lower than in cases where the holes 46L, 46R are not provided. Therefore, the positions of the lower fixing shafts 66L, 66R in the vertical direction are disposed lower than in cases where the holes 46L, 46R are not provided. Accordingly, in the vehicle vertical direction, a predetermined gap can be provided between the pair of upper brackets 52L, 52R and the pair of lower brackets 42L, 42R without moving the positions of the pair of upper brackets 52L, 52R upward. This makes it possible to secure noise and vibration performance of the powertrain 61.

The front fixation portions 45F and the rear fixation portions 45B extending from the main body portions 44L, 44R of the lower brackets 42L, 42R may be attached to the lower cross member 41 so as to straddle the holes 46L, 46R in the vehicle front-rear direction, respectively (see Figs. 3 and 4). That is, the front fixation portions 45F and the rear fixation portions 45B are arranged to bridge over the holes 46L, 46R, and are fixed to the lower cross member 41 at the front and rear of the holes 46L, 46R, respectively. Note that the holes 46L, 46R need not penetrate through the lower cross member 41 in the vertical direction, and may have a shape recessed downward from the surface of the lower cross member 41, for example.

The upper brackets 52L, 52R and the lower brackets 42L, 42R may be disposed at positions that at least partially overlap with each other in the vehicle front-rear direction, respectively (see Fig. 2). That is, in the vehicle front-rear direction, any of the upper attachment points P1L1, P1L2 and the lower attachment points P2L1, P2L2 of the left upper bracket 52L may be disposed between the front fixation point 47F and the rear fixation point 47B of the left lower bracket 42L. The positional relationship between any of the upper attachment points P1R1, P1R2 and the lower attachment points P2R1, P2R2 of the right upper bracket 52R, and the positions between the front fixation point 47F and the rear fixation point 47B of the right lower bracket 42R, may be the same as the above. Further, the lower brackets 42L, 42R may each be disposed on the vehicle rear side of an output shaft 62A of the drive motor 62. That is, in the vehicle front-rear direction, the through holes H of the lower brackets 42L, 42R into which the lower fixing shafts 66L, 66R are inserted may each be disposed on the vehicle rear side of the output shaft 62A of the drive motor 62. Since the powertrain 61 according to the embodiment has the inverter 63 on the rear side, the center of gravity of the powertrain 61 is located on the rear side of the drive motor 62. With the above arrangement, the lower brackets 42L, 42R can stably support the above-described structure at a position closer to the center of gravity.

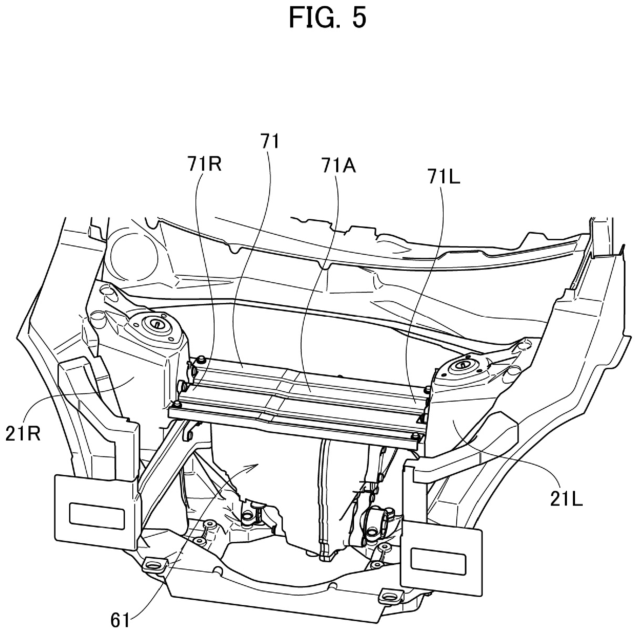

The upper cross member 71 may be disposed between the strut tower 21L and the strut tower 21R, and above the powertrain 61 (see Fig. 5). The upper cross member 71 is coupled to the strut tower 21L and the strut tower 21R, and has a mounting surface 71A on which various vehicle-mounted components can be placed between the strut tower 21L and the strut tower 21R. A left edge portion 71L of the upper cross member 71 is fastened and fixed by bolts to front and rear portions of the side surface of the strut tower 21L. Similarly, the right edge portion 71R of the upper cross member 71 is fastened and fixed by bolts to front and rear portions of the side surface of the strut tower 21R.

(1) The vehicle front structure S includes the pair of side members 11L, 11R, the pair of strut towers 21L, 21R, the pair of suspension arm support portions 32L, 32R, the lower cross member 41, the pair of upper brackets 52L, 52R, and the pair of lower brackets 42L, 42R. The pair of side members 11L, 11R are provided at a front portion of a vehicle and extend in a vehicle front-rear direction. The pair of strut towers 21L, 21R are provided above the pair of side members 11L, 11R and are each coupled to a corresponding one of the pair of side members 11L, 11R. The pair of suspension arm support portions 32L, 32R are provided below the pair of side members 11L, 11R, each support a corresponding one of the suspension arms 31L, 31R, and are fixed to a corresponding one of the pair of side members 11L, 11R. The lower cross member 41 is provided between the pair of suspension arm support portions 32L, 32R and is coupled to the pair of suspension arm support portions 32L, 32R. The pair of upper brackets 52L, 52R each attach the powertrain 61 having at least an engine or a drive motor to a corresponding one of the pair of side members 11L, 11R, or the pair of strut towers 21L, 21R. The pair of lower brackets 42L, 42R attach the powertrain 61 to the lower cross member 41.

In the configuration above, by providing the upper brackets 52L, 52R on one or both of the side members 11L, 11R and the strut towers 21L, 21R, which have relatively high rigidity in the vehicle front-rear direction, and by providing the lower brackets 42L, 42R on the lower cross member 41, which has relatively high rigidity in the vehicle front-rear direction, the mounting rigidity of the powertrain 61 in the vehicle front-rear direction can be improved. Therefore, there is no need to add additional components or the like for improving the rigidity for attachment of the powertrain 61.

(2) Further, according to the embodiment, upper portions of the pair of strut towers 21L, 21R each include fixation points 23L, 23R to which the suspension struts are fixed, and the pair of upper brackets 52L, 52R are each provided at positions overlapping with a corresponding one of the fixation points 23L, 23R in the vehicle front-rear direction. By providing the pair of upper brackets 52L, 52R at positions corresponding to the fixation points 23L, 23R of the strut towers 21L, 21R, which have relatively high rigidity, in the vehicle front-rear direction, the mounting rigidity of the powertrain 61 in the vehicle front-rear direction can be further improved.

(3) Further, according to the embodiment, the pair of upper brackets 52L, 52R are each disposed at positions that at least partially overlap with a corresponding one of the pair of lower brackets 42L, 42R in the vehicle front-rear direction. With the configuration above, when a load is input to the vehicle body from the front, a larger crush zone in the vehicle front-rear direction can be secured, and the load from the front can be more effectively absorbed. In addition, without this configuration, a crush zone in the vehicle front-rear direction may be secured by increasing the size of the vehicle front structure in the vehicle front-rear direction. With the present configuration, it is possible to avoid increasing the size of the vehicle front structure in the vehicle front-rear direction.

(4) Further, according to the embodiment, the powertrain 61 includes the drive motor 62 and the inverter 63, which is a power conversion device provided on a vehicle rear side of the drive motor 62, and the pair of lower brackets 42L, 42R are disposed on a vehicle rear side of the output shaft 62A of the drive motor 62. Since the inverter 63 is provided at the rear, the center of gravity of the vehicle front structure shifts rearward of the powertrain 61. With the arrangement above, the above-described structure can be stably supported at a position closer to the center of gravity.

(5) Further, according to the embodiment, the powertrain 61 is fastened to each of the pair of upper brackets 52L, 52R and the pair of lower brackets 42L, 42R in a vehicle width direction. With the configuration above, loads due to the self-weight of the powertrain 61, road surface input, and drive reaction force can be suitably received. In addition, the loads can be received at four points in a distributed manner, thereby reducing the load at each point. Therefore, for example, more flexible insulators can be used for the insulators provided on the upper brackets 52L, 52R and the lower brackets 42L, 42R, thereby improving noise and vibration performance.

(6) Further, according to the embodiment, the lower cross member 41 includes holes 46L, 46R at positions corresponding to respective ones of the pair of lower brackets 42L, 42R, the holes 46L, 46R each accommodate at least a portion of a corresponding one of the lower brackets 42L, 42R, and the pair of lower brackets 42L, 42R are attached to the lower cross member 41 so as to straddle the holes 46L, 46R. With the configuration above, a predetermined gap can be provided between the pair of upper brackets 52L, 52R and the pair of lower brackets 42L, 42R in the vehicle vertical direction without raising the positions of the pair of upper brackets 52L, 52R. This makes it possible to secure the noise and vibration performance of the powertrain 61. Furthermore, by attaching the pair of lower brackets 42L, 42R to the lower cross member 41 so as to straddle the holes 46L, 46R, it is possible to prevent a decrease in bracket support rigidity.

The embodiment above is merely an illustrative example described to facilitate understanding of the invention. The technical scope of the invention is not limited to the specific technical matters disclosed in the embodiment above, but also includes various modifications, changes, and alternative technologies that can be easily derived therefrom.

In the embodiment above, the configuration in which the differential device 64 is provided directly below the drive motor 62 has been described as an example, but the differential device 64 may be disposed at a position different from the above. In that case, by disposing the pair of lower brackets 42L, 42R on the vehicle rear side of the output shaft 62A, a space can be provided directly below the output shaft 62A. Therefore, the layout of the front axle can be performed more easily.

### REFERENCE SIGNS LIST

- 11L, 11R: Side member
- 21L, 21R: Strut tower
- 23L, 23R: Fixation point
- 31L, 31R: Suspension arm
- 32L, 32R: Suspension arm support portion
- 41: Lower cross member
- 42L, 42R: Lower bracket
- 46L, 46R: Hole
- 52L, 52R: Upper bracket
- 61: Powertrain
- 62: Drive motor
- 62A: Output shaft
- 63: Inverter (power conversion device)
- S: Vehicle front structure

## Claims

1. A vehicle front structure comprising:
a pair of side members provided at a front portion of a vehicle and extending in a vehicle front-rear direction;
a pair of strut towers provided above the pair of side members, each strut tower coupled to a corresponding one of the pair of side members;
a pair of suspension arm support portions provided below the pair of side members, each suspension arm support portion supporting a suspension arm and fixed to a corresponding one of the pair of side members;
a lower cross member provided between the pair of suspension arm support portions and coupled to the pair of suspension arm support portions;
a pair of upper brackets each attaching a powertrain having at least an engine or a drive motor to a corresponding one of the pair of side members or the pair of strut towers; and
a pair of lower brackets attaching the powertrain to the lower cross member.

2. The vehicle front structure according to claim 1, wherein
upper portions of the pair of strut towers each include a fixation point to which a suspension strut is fixed, and
the pair of upper brackets are each provided at positions overlapping with a corresponding one of the fixation points in the vehicle front-rear direction.

3. The vehicle front structure according to claim 1 or 2, wherein the pair of upper brackets are each disposed at positions that at least partially overlap with a corresponding one of the pair of lower brackets in the vehicle front-rear direction.

4. The vehicle front structure according to claim 3, wherein
the powertrain includes the drive motor and a power conversion device provided on a vehicle rear side of the drive motor, and
the pair of lower brackets are disposed on a vehicle rear side of an output shaft of the drive motor.

5. The vehicle front structure according to any one of claims 1 to 4, wherein the powertrain is fastened to each of the pair of upper brackets and the pair of lower brackets in a vehicle width direction.

6. The vehicle front structure according to any one of claims 1 to 5, wherein
the lower cross member includes holes at positions corresponding to respective ones of the pair of lower brackets,
the holes each accommodate at least a portion of a corresponding one of the lower brackets, and
the pair of lower brackets are attached to the lower cross member so as to straddle the holes.
